# EUROPÄISCHE PATENTSCHRIFT

(11) **EP 0 387 262 B1**
(45) Veröffentlichungstag und Bekanntmachung des Hinweises auf die Patenterteilung: **21.07.1993**
(21) Anmeldenummer: 88909265.6
(22) Anmeldetag: 03.11.1988
(51) Int. Cl.: A61C 17/06, B04B 1/02

(54) **ABSCHEIDER**
SEPARATOR
SEPARATEUR

(30) Priorität: 03.11.1987 AT 2888/87
(43) Veröffentlichungstag der Anmeldung: 19.09.1990
(60) Teilanmeldung: 92120381.6
(73) Patentinhaber: Trawöger, Werner, 6020 Innsbruck (AT); PREGENZER, Bruno, 6173 Oberperfuss (AT)
(72) Erfinder: Trawöger, Werner, 6020 Innsbruck (AT); PREGENZER, Bruno, 6173 Oberperfuss (AT)
(74) Vertreter: Torggler, Paul, Dr.
(86) Internationale Anmeldenummer: AT8800086
(87) Internationale Veröffentlichungsnummer: WO8904152

(56) Entgegenhaltungen:
- EP-A- 0 224 232
- EP-A- 0 263 344
- WO-A-86/03669
- DE-A- 3 521 929

## Beschreibung

Die Erfindung betrifft einen Abscheider nach dem Oberbegriff des Patentanspruches 1 gemäß Satz 1 (für Vertragsstaat NL).

Ein derartiger Abscheider ist beispielsweise der WO-A-86/03669 zu entnehmen. Dort wird der Zentrifuge das zu trennende Gemisch entweder aus einer ersten Abscheidestufe oder direkt zugeführt, wobei die aus der Zentrifuge in den Auffangraum abfließenden Feststoffe gemeinsam mit der Restflüssigkeit mittels des Unterdruckes einer zentralen Sauganlage in den Absetzbehälter überführt werden, aus dem die Restflüssigkeit wieder dem Zentrifugeneinlaß zugeführt wird.

Hinsichtlich Anspruch 1, Satz 2 (für die Vertragsstaaten CH, DE, FR, GB, IT, LI, SE) bildet die EP-A-263 344, welche einen Stand der Technik gemäß Art. 54(3)L4) darstellt, den nächstliegenden Stand der Technik. Dieser Druckschrift ist ein Abscheider zu entnehmen, der unterhalb des Feststoffablaufes einen abnehmbaren Absetzbehälter mit einer vorgegebenen Sedimentationshöhe aufweist. In diesen taucht das Ansaugrohr einer Rückförderpumpe, deren Druckrohr in die Gemischzufuhrleitung mündet und dort von der das Gemisch einbringenden Speisepumpe erfaßt wird. Die Gemischzuführleitung verläuft dabei zentral durch den Feststoffablauf ins Innere der Zentrifuge.

Die DE-A-30 30 614, DE-A-35 21 929, DE-A-35 42 115, DE-A-35 42 133, DE-A-35 42 134 oder DE-A-36 01 254 zeigen Zentrifugen, aus denen ebenfalls bei Stillstand die Feststoffe und ein Restflüssigkeitsanteil in durch einen an der Unterseite der Zentrifuge angeordneten Stutzen in einen Absetzbehälter abfließen. Die sich sammelnde Restflüssigkeit wird zu Beginn jeder weiteren Zentrifugierphase über den Stutzen des Feststoffablaufs wieder in die Zentrifuge zurückgesaugt. Trotz im Absetzbehälter angeordneter Beruhigungsflügel wird die Sedimentation der Feststoffe bei jeder Rücksaugung der Restflüssigkeit in die Zentrifuge empfindlich gestört.

Die Aufgabe der Erfindung besteht nun darin, bei einem Abscheider der eingangs genannten Art die Rückführung der Restflüssigkeit unabhängig vom Betrieb einer Sauganlage, sowie ohne Rücksaugung durch den Feststoffablauf zu ermöglichen.

Erfindungsgemäß wird dies nun dadurch erreicht, daß die Pumpe im Auffangraum angeordnet ist und die zum Gemischeinlaß der Zentrifuge führende Leitung von der Druckseite der Pumpe ausgeht. Die Verwendung einer eigenen, angetriebenen Pumpe erlaubt es, diese hinsichtlich gewünschter Pumpenkriterien, also der Pumpenleistung, des Querschnitts der von der Druckseite ausgehenden Leitung usw. sowie hinsichtlich der günstigsten Bedingungen im Auffangraum oder im Absetzbehälter zu bestimmen.

Durch die Anordnung der Pumpe im Auffangraum der Zentrifuge kann der Absetzbehälter an beliebiger Stelle vom Auffangraum getrennt angeordnet werden, wobei die zum Gemischeinlaß führende Leitung in zwei Abschnitte unterteilt wird. Der erste Abschnitt verbindet dann den Auffangraum mit dem Absetzbehälter und der zweite Abschnitt den Flüssigkeitssammelraum des Absetzbehälters mit dem Gemischeinlaß. Eine bevorzugte Ausführung sieht dann vor, daß der Auffangraum durch die Pumpenkammer gebildet ist, und der erste Abschnitt der Leitung von der Druckseite der Pumpe ausgeht. Dadurch kann der Flüssigkeitssammelraum ein Mehrfaches der Flüssigkeitsmenge aufweisen, die nach jeder Zentrifugierphase von der Pumpe übergeleitet wird. Die Absetzung der Feststoffe kann dadurch wesentlich verbessert werden, da die Intervalle zwischen der Einspeisung der Restflüssigkeit in den Gemischeinlaß der Zentrifuge größer gemacht werden können. Für die Einspeisung der Restflüssigkeit aus dem Absetzbehälter kann der zweite Abschnitt der Zuführleitung beispielsweise einen Saugheber enthalten. Die Höhe des Saugschenkels kann etwa einem Fünffachen des Volumens entsprechen, das von der Pumpe nach jeder Zentrifugierphase in den Absetzbehälter überführt wird.

In einer anderen Ausführung kann zu diesem Zweck vorgesehen sein, daß der zweite Abschnitt den Ansaugkanal einer zweiten Pumpe umfaßt.

Anstelle eines Saughebers bzw. einer zweiten Pumpe kann natürlich auch ein gegebenenfalls abgeschoteter Überlauf vorgesehen sein, sodaß auch über diesen möglichst beruhigte und damit geklärte Restflüssigkeit in den Gemischeinlaß gelangt. In jeden der beschriebenen Ausführungen ist der Anteil der aus Absetzbehälter in die Zentrifuge zurückgelangenden Feststoffe wesentlich verringert, wobei deren Auswahl nach den speziellen, räumlichen Gegebenheiten am Verwendungsort erfolgen kann.

So kann es in einer ersten Ausführung günstig sein, wenn der Absetzbehälter einen abnehmbaren Aufsatz der Gemischeinlaßkammer des Zentrifugengehäuses bildet. Eine derartige Ausführung ist vor allem deshalb von Vorteil, da der mit Feststoffen gefüllte Absetzbehälter nach oben abgenommen werden kann. Besonders praktisch ist dann eine Ausführung, in der der Absetzbehälter einen geschlossenen Behälter bildet, der mit einem Einlaß für den ersten Abschnitt und mit einem Auslaß für den zweiten Abschnitt der von der Pumpe kommenden Leitung versehen ist, da hier nur die Öffnungen von Ein- und Auslaß zu verschließen sind, sodaß ein Verschütten des Inhalts praktisch ausgeschlossen wird. Für die einfache Steckmontage erweist es sich dabei von Vorteil, wenn der Auslaß des zweiten Abschnittes durch ein aus dem Boden des geschlossenen Absetzbehälters vorstehendes Rohrstück gebildet ist, das eine Einstecköffnung in der Abdeckung der Gemischeinlaßkammer durchragt. Zusätzlich kann der Absetzbehälter noch ein in die Gemischeinlaßkammer ragendes Entlüftungsrohr aufweisen. Dabei ist in einer weiteren Ausführung vorgesehen, daß im vorstehenden Rohrstück und im gegebenenfalls vorgesehenen Entlüftungsrohr je eine Absperreinrichtung angeordnet ist, die bei aufgesetztem Absetzbehälter geöffnet ist und sich bei der Abnahme verschließt.

Die im Auffangraum angeordnete Pumpe ist bevorzugt eine mit der Zentrifuge koaxiale Flügelradpumpe mit gekoppelten oder unabhängigen Antrieb. Die gegebenenfalls im zweiten Abschnitt der Zuführleitung angeordnete Pumpe sein, kann ebenfalls koaxial mit der Zentrifuge angeordnet einen eigenen oder einen mit der Zentrifuge gekoppelten Antrieb aufweisen, beispielsweise eine selbstansaugende Pumpe mit Verdrängerwirkung oder ebenfalls eine Kreiselpumpe sein.

Nachstehend wird nun die Erfindung an Hand der Figuren der bei liegenden Zeichnungen näher beschrieben, ohne darauf beschränkt zu sein.

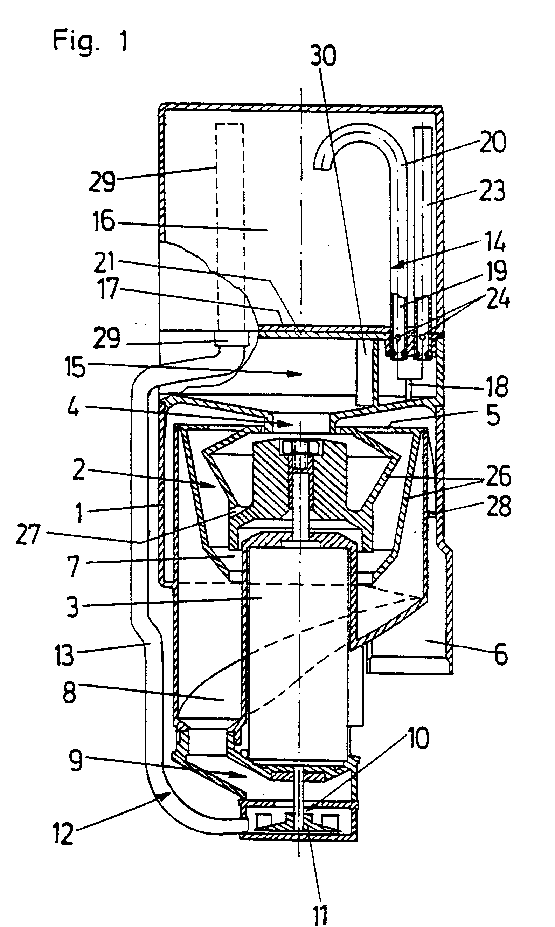

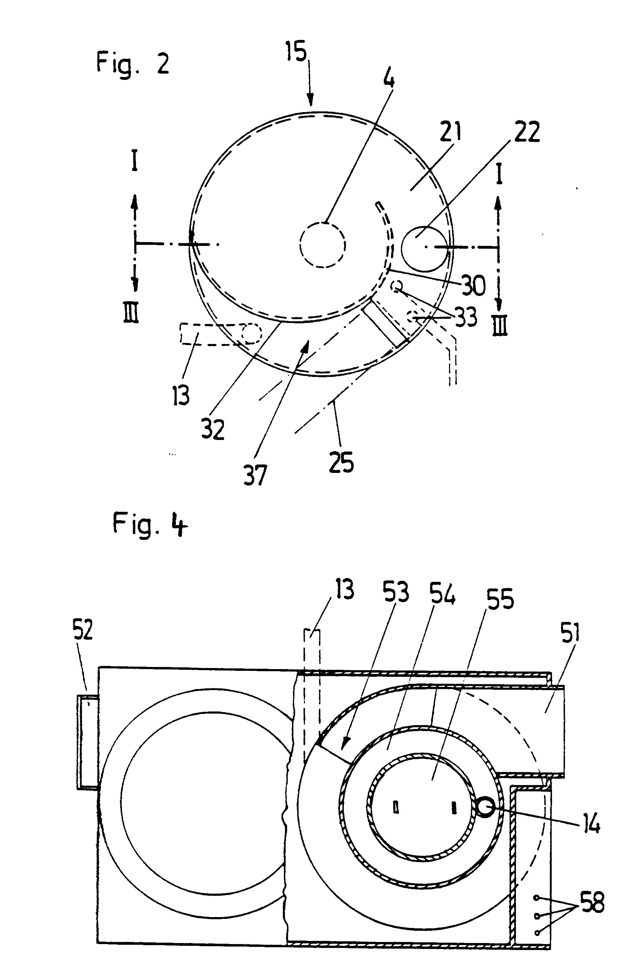

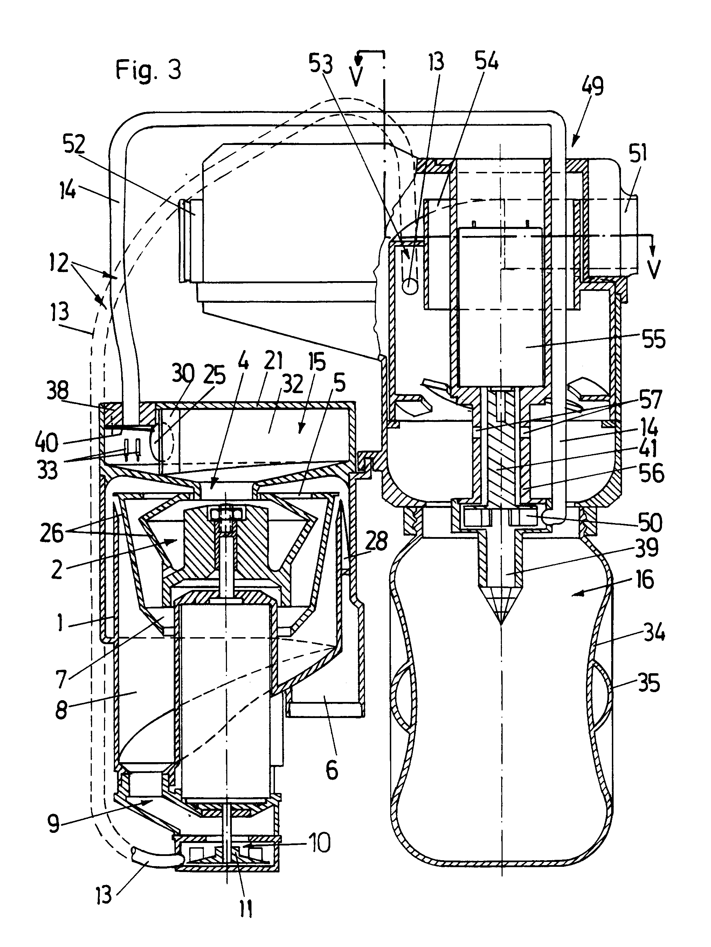

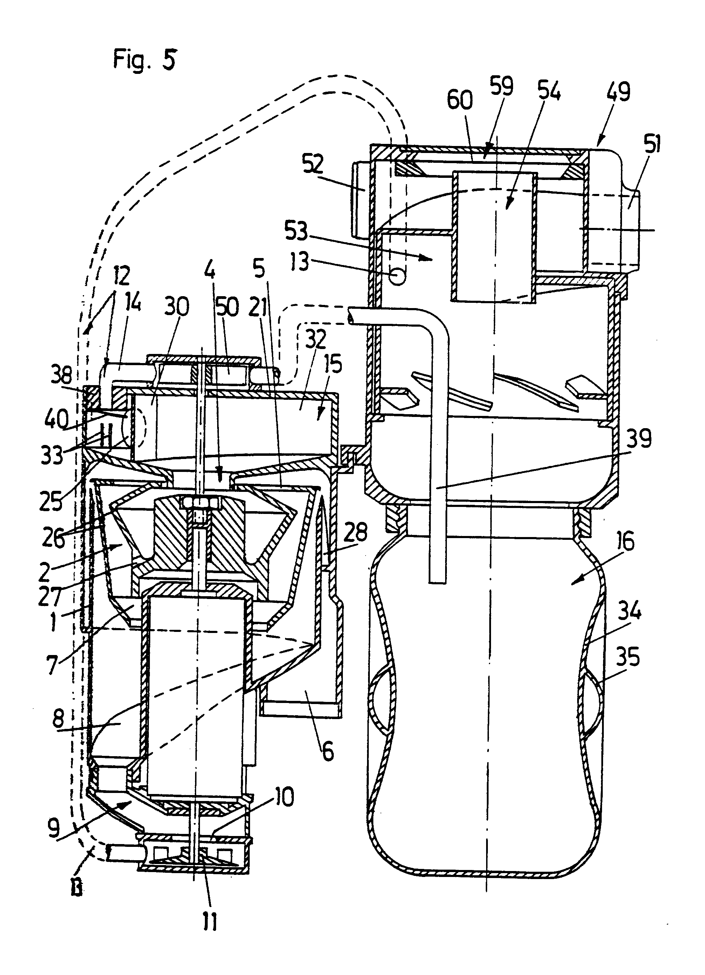

Die Fig. 1 zeigt einen Längsschnitt entsprechend der Linie I-I von Fig. 2 durch eine erste Ausführung des erfindungsgemäßen Abscheiders, die Fig. 2 eine Draufsicht auf die Ausführung nach Fig. 1 mit abgenommenen Absetzbehälter sowie auf die Ausführungen nach Fig. 3, die Fig. 3 einen Längsschnitt entsprechend der Linie III-III von Fig. 2 durch eine zweite Ausführung, die Fig. 4 einen Schnitt nach der Linie V-V von Fig. 3 und die Fig. 5 einen Längsschnitt durch eine dritte Ausführung.

Ein erfindungsgemäßer Abscheider weist ein Gehäuse 1 auf, in dem eine Zentrifuge 2 und unterhalb der Zentrifuge 2 ein Auffangraum 9 vorgesehen ist. Die Zentrifuge 2 ist an der Oberseite mit einem zentralen Einlaß 4 für das zu trennende Feststoff-Flüssigkeitsgemisch versehen, das über ein Zulaufrohr 25 (Fig. 2) und eine Gemischeinlaßkammer 15 zum Einlaß 4 gelangt. Die Zentrifuge 2 weist zwei in Durchflußrichtung in Serie angeordnete Vollmäntel 26 mit konvexen Erzeugenden auf, die jeweils eine Zentrifugenkammer definieren. Zwischen den beiden Zentrifugenkammern sind Durchtrittsöffnungen 27 vorgesehen, und die äußere Zentrifugenkammer weist einen oberen Flüssigkeitsauslaß 5 mit einer angeschlossenen Abflußleitung 6 auf, in der steil ansteigend ein einer Schraubenlinie folgender Leitsteg 28 angeordnet ist. An der Unterseite des äußeren Mantels 26 sind Abflußöffnungen 7 des Feststoffauslasses ausgebildet, durch die bei Stillstand der Zentrifuge 2 die abzentrifugierten Feststoffe aus bei den Zentrifugenbehältern zusammen mit etwas Restflüssigkeit über einen Trichter 8 in den Auffangraum 9 abfließen. Der Trichter 8 ist dabei asymmetrisch ausgebildet und umschließt den abgekapselten Antriebsmotor 3 der Zentrifuge 2.

In der Ausführung nach Fig. 1 ist der unterste Teil des Auffangraumes 9 durch die Pumpenkammer 10 einer Flügelrad- bzw. Kreiselpumpe 11 gebildet, wobei von der Pumpenkammer 10 ein erster Abschnitt 13 einer Zuführleitung 12 in den auf der Gemischeinlaßkammer 15 aufgesetzten Absetzbehälter 16 führt. Der Absetzbehälter 16 ist allseitig geschlossen und weist im Inneren jeweils vom Boden 17 aufsteigend, ein Einströmrohr 29, ein Abflußrohr 19 des zweiten Abschnitts 14 der Zuführleitung 12 und ein Entlüftungsrohr 23 auf. Alle drei Rohre 29, 19 und 23 stehen dabei aus dem Boden 17 vor, wobei die Abdeckung 21 der Gemischeinlaßkammer 15 eine Einstecköffnung 22 aufweist, durch die die Enden der beiden Rohre 19 und 23 in die Gemischeinlaßkammer 15 ragen. Im Inneren der Enden der bei den Rohre 19 und 23 sind Absperreinrichtungen 24 angeordnet, die durch einen gemeinsamen Betätigungsteil 18 offen gehalten werden, wenn der Absetzbehälter 16 aufgesetzt ist, und sich bei seiner Abnahme verschließen. Der Betätigungsteil 18 liegt dabei auf dem Boden der Gemischeinlaßkammer 15 auf. Wie insbesondere aus Fig. 2 ersichtlich, ist die Gemischeinlaßkammer 15 über etwa ein Drittel des Umfangs mit einem spiralig nach einwärts geführten Außenwandabschnitt 32 versehen, sodaß in diesem Bereich eine äußere Abstufung 37 gegeben ist. In diesem Bereich steht das Einströmrohr 29 aus dem Boden 17 des Absetzbehälters 16 ins Freie vor, wo der Anschluß des ersten Abschnittes 13 der Zuführleitung 12 liegt.

Der zweite Abschnitt 14 der Zuführleitung 12 ist durch einen Saugheber 20 gebildet, dessen längerer Schenkel das Abflußrohr 19 bildet. In der Verlängerung des Außenwandabschnitts 32 verläuft eine kurze Trennwand 30 kreisbogenförmig an der Einstecköffnung 22 vorbei, sodaß hier ein Ringkanaleinlauf das Zulaufrohr 29 verlängert, und in diesen die Flüssigkeit über den Saugheber 20 einfließt. In diesem Bereich sind Meßfühler 33 angeordnet, über die die Zentrifuge 2 entweder bei einer Gemischzufuhr über das Zulaufrohr 25 oder bei einer Flüssigkeitszufuhr über das Abflußrohr 19 in Betrieb gesetzt wird. Die Pumpe 11, die mit dem Zentrifugenmotor gekoppelt ist, wird dabei gleichzeitig in Betrieb gesetzt und überführt die nach der vorangehenden Zentrifugierphase in den Auffangraum 9 abgeflossenen Feststoffe bzw. Restflüssigkeit in den Absetzbehälter 16, aus dem bei Erreichen des jeweils benötigten Füllstandes der Saugheber 20 die geklärte Restflüssigkeit wieder in die Gemischeinlaßkammer 15 einleitet.

In der Ausführung nach Fig. 3 ist der Abscheider noch um eine Luftabscheideeinrichtung 49 ergänzt, sodaß von einer Sauganlage kommendes Saugluft-Flüssigkeits-Feststoffgemisch in seine Bestandteile getrennt werden kann. Bei einer derartigen Ausführung wird der Gemischeinlaßkammer 15 üder das Zulaufrohr 25 vor allem das Flüssigkeits-Feststoffgemisch aus einem Speibecken oder einer anderen zusätzlichen zahnärztlichen Einrichtung zugeführt. Der Aufbau der Zentrifuge 2 samt Auffangraum 9, Pumpe 11 und Gemischeinlaßkammer 15 entspricht dabei der der in Fig. 1 gezeigten Ausführung, sodaß die dort näher erläuterten Teile, die dieselben Bezugsziffern aufweisen, hier nicht mehr beschrieben sind.

Die Luftabscheideeinrichtung 49 weist einen Gemischeinlaß 51 auf, an den sich ein Abscheidezyklon 53 anschließt, der ein zentrales Luftabführrohr 54 umgibt. Dieses führt über ein nicht näher gezeigtes Schalt- und Sperrventil zu einem Luftauslaß 52 und von dort zu einer Saugpumpe. Das von der Luft getrennte Feststoff-Flüssigkeitsgemisch fällt im Anschluß an den Abscheidezyklon 53 nach unten in den Absetzbehälter 16, der in dieser Ausführung an der Unterseite der Luftabscheideeinrichtung 49 abnehmbar gehalten ist, und zur Erleichterung der Abnahme die volumensvergrößenden Wandungsabschnitte 34 aufweist. Von der Pumpe 11 unterhalb der Zentrifuge 2 wird nun das anfallende Feststoff-Restflüssigkeitsgemisch über den ersten Abschnitt 13 der Zuführleitung 12 in den Abscheidezyklon 53 eingepumpt, sodaß es sich im Absetzbehälter 16 mit dem über den Gemischeinlaß 51 kommenden und im Abscheidezyklon 53 abgetrennten Feststoff-Flüssigkeitsgemisch vereinigt.

Die im Flüssigkeitssammelraum des Absetzbehälters 16 überstehende Flüssigkeit und Restflüssigkeit wird nun von einer zweiten Pumpe 50 über den zweiten Abschnitt 14 der Zuführleitung in die Gemischeinlaßkammer 15 übergeleitet. Die zweite Pumpe 50 besitzt hierzu ebenfalls ein Ansaugrohr 39, das vertikal in den Absetzbehälter 16 ragt . Dabei ist die Antriebswelle 41 der zweiten Pumpe 50 von einem Schutzrohr 56 umgeben, in das Flüssigkeit eindringen wird. Diese Flüssigkeit wird dabei durch Austrittsöffnungen 57 im Schutzrohr 56 nahe dem Motor 55 wieder seitlich ausgesprüht, und kann zum Spülen der unteren Wandteile der Luftabscheideeinrichtung 49 verwendet werden. Die ins Schutzrohr 56 aufsteigende Flüssigkeit kann damit nicht in den oftmals schlecht abgedichteten Motor 55 eindringen. Da in der Luftabscheideeinrichtung 49 Unterdruck herrscht, ist am Austrittsende der Zuführleitung 12 in der Gemischeinlaßkammer 15 ein Rückschlagventil 40 vorgesehen, und gegebenenfalls kann durch nicht gezeigte Füllstandsfühler die Pumpenkammer 10 teilgefüllt verbleiben, sodaß auch hier der Luftrückfluß unterbunden ist. Da die rückfließende Luftmenge jedoch die Saugleistung kaum beeinträchtigt, ist eine Sperre des ersten Abschnittes 13 der Zuführleitung 12 nicht erforderlich.

Fig. 4 zeigt einen Querschnitt durch die Luftabscheideeinrichtung, in dem in Fig. 3 nicht ersichtliche Meßfühler 58 gezeigt sind, über die die zweite Pumpe 50 in Abhängigkeit vom Füllstand der im Absetzbehälter bzw. oberhalb desselben sammelnden Flüssigkeit und ein Absperrventil für den Luftauslaß 52 geschaltet werden.

In der Ausführung nach Fig. 5, die ebenfalls eine Kombination des Abscheiders mit einer Luftabscheideeinrichtung 49 zeigt, ist die zweite Pumpe 50 am Abscheidergehäuse 1 angeordnet. Der übrige Aufbau des Abscheiders mit Zentrifuge 2 und im Auffangraum 9 angeordneten Pumpe 11 entspricht wieder den Ausführungen nach Fig. 1 und 3. Die zweite Pumpe 50 ist dabei auf der Gemischeinlaßkammer 15 vorgesehen, deren Abdeckung 21 von einer von der Zentrifuge 2 durch den trichterartigen Gemischeinlaß 4 hochstehenden Verlängerung der Antriebswelle des Motors 3 durchsetzt ist. Die Zuführleitung 12 weist wiederum einen ersten Abschnitt 13, der wie in der Ausführung nach Fig. 3 in den Abscheidezyklon 53 mündet, und einen zweiten Abschnitt 14 zwischen dem Absetzbehälter 16 und der Gemischeinlaßkammer 15 wobei der zweite Abschnitt 14 ein verlängertes Ansaugrohr 39 umfaßt,das vom Flüssigkeitssammelraum des Absetzbehälters ausgeht, und zur zweiten Pumpe 50 führt. In der Luftabscheideeinrichtung 49 ist innerhalb des Abscheidezyklons 53 zentral das Luftabführrohr 54 angeordnet, oberhalb dessen das Absperrventil 59 des Luftauslasses 52 vorgesehen ist. Dies besteht aus einer Membran 60, die in Abhängigkeit von den zu ihren beiden Seiten herrschenden Druckverhältnissen sich an das Luftabführrohr 54 anlegt bzw. davon abhebt. Die Schaltung erfolgt dabei über die in Fig. 4 gezeigten Meßfühler 58. Aufgrund des Unterdruckes in der Luftabscheideeinrichtung 49 ist an der Mündung des Abschnitts 14in die Gemischeinlaßkammer 15 wiederum ein Rückschlagventil 40 vorgesehen. Die Pumpe 11 und die zweite Pumpe 50 sind mit der Zentrifuge 2 antriebsgekoppelt, sodaß nach jeder Zentrifugierphase in den Auffangraum 9 abfließende Feststoffe und Restflüssigkeit in der folgenden Zentrifugierphase in den Absetzbehälter 16 überführt werden, wobei die Restflüssigkeit und aus der Luftabscheideeinrichtung anfallende Flüssigkeit in jeder Zentrifugierphase wieder in die Gemischeinlaßkammer 15 eingeleitet wird. Die Schaltung erfolgt dabei entweder über die Fühler 33, die eine Gemischzufuhr aus dem Speibecken über das Zulaufrohr 25 oder über Fühler 58, die den Flüssigkeitsstand im Absetzbehälter 16 anzeigen.

## Patentansprüche (Patentansprüche für folgende(n) Vertragsstaat(en): CH, DE, FR, GB, IT, LI, SE)

1. Abscheider zur Trennung eines Feststoff-Flüssigkeitsgemisches, insbesondere von dentalem Abwasser, mit einer Vollmantelzentrifuge (2), die einen Gemischeinlaß (4), einen Auslaß (6) für die abgetrennte Flüssigkeit und einen Feststoffablauf (8) aufweist, mit einem unterhalb des Feststoffablaufes (8) angeordneten, durch eine Pumpenkammer (10) gebildeten Auf-fangraum (9) für die nach jeder Zentrifugierphase unter Schwerkrafteinwirkung mit einem Restflüssigkeitsanteil abfließenden Feststoffe, in dem eine Pumpe (11) angeordnet ist, mit einem abnehmbaren Absetzbehälter (16) für die Feststoffe, mit einer Einrichtung zur Wiederzuführung der oberhalb der sedimentierenden Feststoffe sich sammelnden Restflüssigkeit in die Zentrifuge (2), und mit einer in Abschnitte (13,14) unterteilten Leitung (12), wobei der erste Abschnitt (13) der Leitung (12) von der Druckseite der Pumpe (11) ausgeht und den Auffangraum (9) mit dem Absetzbehälter (16) verbindet und wobei der zweite Abschnitt (14) den Flüssigkeitssammelraum des Absetzbehälters (16) mit dem Gemischeinlaß (4) der Zentrifuge (2) verbindet.

2. Abscheider nach Anspruch 1, dadurch gekennzeichnet, daß der zweite Abschnitt (14) einen Saugheber (20) umfaßt.

3. Abscheider nach Anspruch 1, dadurch gekennzeichnet, daß der zweite Abschnitt (14) den Ansaugkanal (39) einer zweiten Pumpe (50) umfaßt.

4. Abscheider nach einem der Ansprüche 1 bis 3, dadurch gekennzeichnet, daß der Absetzbehälter (16) einen abnehmbaren Aufsatz einer Gemischeinlaßkammer (15) des Zentrifugengehäuses (1) bildet.

5. Abscheider nach Anspruch 1 und 4, dadurch gekennzeichnet, daß der Absetzbehälter (16) einen geschlossenen Behälter bildet, der mit einem Einlaß für den ersten Abschnitt (13) und mit einem Auslaß für den zweiten Abschnitt (14) der Leitung (12) versehen ist.

6. Abscheider nach Anspruch 5, dadurch gekennzeichnet, daß der Auslaß des zweiten Abschnittes (14) durch ein aus dem Boden (17) des geschlossenen Absetzbehälters (16) vorstehendes Rohrstück (19) gebildet ist, das eine Einstecköffnung (22) in der Abdeckung (21) der Gemischeinlaßkammer (15) durchragt.

7. Abscheider nach Anspruch 5 oder 6, dadurch gekennzeichnet, daß der geschlossene Absetzbehälter (16) ein in die Gemischeinlaßkammer (15) ragendes Entlüftungsrohr (23) aufweist.

8. Abscheider nach Anspruch 6 oder 7, dadurch gekennzeichnet, daß im vorstehenden Rohrstück (19) und im gegebenenfalls vorgesehenen Entlüftungsrohr (23) je eine Absperreinrichtung (24) angeordnet ist, die bei aufgesetztem Absetzbehälter (16) geöffnet ist und sich bei der Abnahme verschließt.

9. Abscheider nach einem der Ansprüche 1 bis 3, dadurch gekennzeichnet, daß die Pumpe (11) mit der Zentrifuge (2) koaxial angeordnet ist.

10. Abscheider nach Anspruch 3, dadurch gekennzeichnet, daß die zweite Pumpe (50) mit der Zentrifuge (2) koaxial angeordnet und vorzugsweise selbstansaugend ausgebildet ist.

## Patentansprüche (Patentansprüche für folgende(n) Vertragsstaat(en): NL)

1. Abscheider zur Trennung eines Feststoff-Flüssigkeitsgemisches, insbesondere von dentalem Abwasser, mit einer Vollmantelzentrifuge (2), die einen Gemischeinlaß (4), einen Auslaß (6) für die abgetrennte Flüssigkeit und einen Feststoffablauf (8) aufweist, mit einem unterhalb des Feststoffablaufes (8) angeordneten Auffangraum (9) für die nach jeder Zentrifugierphase unter Schwerkrafteinwirkung mit einem Restflüssigkeitsanteil abfließenden Feststoffe, dem eine Pumpe (11) zugeordnet ist, mit einem abnehmbaren Absetzbehälter (16) für die Feststoffe, mit einer Einrichtung zur Wiederzuführung der oberhalb der sedimentierenden Feststoffe sich sammelnden Restflüssigkeit in die Zentrifuge (2), und mit einer Leitung (12), die den Auffangraum (9) mit dem Gemischeinlaß (4) der Zentrifuge (2) verbindet, dadurch gekennzeichnet, daß die Pumpe (11) im Auffangraum (9) angeordnet ist und die zum Gemischeinlaß (4) der Zentrifuge (2) führende Leitung (12) von der Druckseite der Pumpe (11) ausgeht.

2. Abscheider nach Anspruch 1, mit einer in Abschnitte (13,14) unterteilten Leitung (12), wobei deren erster Abschnitt (13) den Auffangraum mit dem Absetzbehälter (16) und deren zweiter Abschnitt (14) den Flüssigkeitssammelraum des Absetzbehälters (16) mit dem Gemischeinlaß (4) der Zentrifuge (2) verbindet, dadurch gekennzeichnet, daß der Auffangraum (9) durch die Pumpenkammer (10) gebildet ist, und der erste Abschnitt der Leitung (12) von der Druckseite der Pumpe (11) ausgeht.

3. Abscheider nach Anspruch 2, dadurch gekennzeichnet, daß der zweite Abschnitt (14) einen Saugheber (20) umfaßt.

4. Abscheider nach Anspruch 2, dadurch gekennzeichnet, daß der zweite Abschnitt (14) den Ansaugkanal einer zweiten Pumpe (50) umfaßt.

5. Abscheider nach einem der Ansprüche 2 bis 4, dadurch gekennzeichnet, daß der Absetzbehälter (16) einen abnehmbaren Aufsatz der Gemischeinlaßkammer (15) des Zentrifugengehäuses (1) bildet.

6. Abscheider nach Anspruch 2 und 5, dadurch gekennzeichnet, daß der Absetzbehälter (16) einen geschlossenen Behälter bildet, der mit einem Einlaß für den ersten Abschnitt (13) und mit einem Auslaß für den zweiten Abschnitt (14) der von der Pumpe kommenden Leitung (12) versehen ist.

7. Abscheider nach Anspruch 6, dadurch gekennzeichnet, daß der Auslaß des zweiten Abschnittes (14) durch ein aus dem Boden (17) des geschlossenen Absetzbehälters (16) vorstehendes Rohrstück (19) gebildet ist, das eine Einstecköffnung (22) in der Abdeckung (21) der Gemischeinlaßkammer (15) durchragt.

8. Abscheider nach Anspruch 6 oder 7, dadurch gekennzeichnet, daß der geschlossene Absetzbehälter (16) ein in die Gemischeinlaßkammer (15) ragendes Entlüftungsrohr (23) aufweist.

9. Abscheider nach Anspruch 7 oder 8, dadurch gekennzeichnet, daß im vorstehenden Rohrstück (19) und im gegebenenfalls vorgesehenen Entlüftungsrohr (23) je eine Absperreinrichtung (24) angeordnet ist, die bei aufgesetztem Absetzbehälter (16) geöffnet ist und sich bei der Abnahme verschließt.

10. Abscheider nach Anspruch 1 oder 2, dadurch gekennzeichnet, daß die Pumpe (11) eine mit der Zentrifuge (2) koaxiale Kreiselpumpe ist.

11. Abscheider nach Anspruch 4, dadurch gekennzeichnet, daß die zweite Pumpe (50) eine mit der Zentrifuge (2) koaxiale, vorzugsweise selbstansaugende Pumpe ist.

12. Abscheider nach einem der Ansprüche 1 bis 11, bei dem der Gemischeinlaß (4) an der Oberseite der Zentrifuge (2) vorgesehen ist, dadurch gekennzeichnet, daß die Pumpe (11) im Bereich des Feststoffablaufs (8) koaxial mit der Zentrifuge (2) angeordnet ist.

## Claims (Claims for the following Contracting State(s): CH, DE, FR, GB, IT, LI, SE)

1. A separator for the separation of a solid-fluid mixture, in particular dental waste water, having a full-casing centrifuge (2) which has a mixture inlet (4), an outlet (6) for the separated fluid and a solid discharge (8), having a catch space (9) arranged beneath the solid discharge (8) and formed by a pump chamber (10), for the solids which flow away under the effect of the force of gravity with a residual fluid component after each centrifuging phase, a pump (11) being arranged in the catch space, having a removable settlement container (16) for the solids, a means for returning the residual fluid which collects above the sedimenting solids into the centrifuge (2), and a conduit (12) which is subdivided into portions (13, 14), wherein the first portion (13) of the conduit (12) extends from the pressure side of the pump (11) and connects the catch space (9) to the settlement container (16) and the second portion (14) connects the fluid collecting space of the settlement container (16) to the mixture inlet (4) of the centrifuge (2).

2. A separator according to claim 1 characterised in that the second portion (14) includes a siphon (20).

3. A separator according to claim 1 characterised in that the second portion (14) includes the intake duct (39) of a second pump (50).

4. A separator according to one of claim 1 to 3 characterised in that the settlement container (16) forms a removable attachment on a mixture inlet chamber (15) of the centrifuge housing (1).

5. A separator according to claims 1 and 4 characterised in that the settlement container (16) forms a closed container which is provided with an inlet for the first portion (13) and an outlet for the second portion (14) of the conduit (12).

6. A separator according to claim 5 characterised in that the outlet of the second portion (14) is formed by a pipe portion (19) which projects from the bottom (17) of the closed settlement container (16) and which passes through an insertion opening (22) in the cover (21) of the mixture inlet chamber (15).

7. A separator according to claim 5 or claim 6 characterised in that the closed settlement container (16) has a vent pipe (23) which projects into the mixture inlet chamber (15).

8. A separator according to claim 6 or claim 7 characterised in that a respective shut-off means (24) is disposed in each of the projecting pipe portion (19) and in the optionally provided vent pipe (23), the shut-off means being opened when the settlement container (16) is fitted and closing when it is removed.

9. A separator according to one of claims 1 to 3 characterised in that the pump (11) is arranged coaxially with the centrifuge (2).

10. A separator according to claim 3 characterised in that the second pump (50) is arranged coaxially with the centrifuge (2) and is preferably self-priming.

## Claims (Claims for the following Contracting State(s): NL)

1. A separator for the separation of a solid-fluid mixture, in particular dental waste water, having a full-casing centrifuge (2) which has a mixture inlet (4), an outlet (6) for the separated fluid and a solid discharge (8), having a catch space (9) arranged beneath the solid discharge (8) for the solids which flow away under the effect of the force of gravity with a residual fluid component after each centrifuging phase, a pump (11) being associated with the catch space, having a removable settlement container (16) for the solids, a means for returning the residual fluid which collects above the sedimenting solids into the centrifuge (2), and a conduit (12) which connects the catch space (9) to the mixture inlet (4) of the centrifuge (2), characterised in that the pump (11) is arranged in the catch space (9) and the conduit (12) which leads to the mixture inlet (4) of the centrifuge (2) extends from the pressure side of the pump (11).

2. A separator according to claim 1 having a conduit (12) which is subdivided into portions (13, 14), wherein the first portion (13) thereof connects the catch space to the settlement container (16) and the second portion (14) thereof connects the fluid collecting space of the settlement container (16) to the mixture inlet (4) of the centrifuge (2), characterised in that the catch space (9) is formed by the pump chamber (10) and the first portion of the conduit (12) extends from the pressure side of the pump (11).

3. A separator according to claim 2 characterised in that the second portion (14) includes a siphon (20).

4. A separator according to claim 2 characterised in that the second portion (14) includes the intake duct of a second pump (50).

5. A separator according to one of claims 2 to 4 characterised in that the settlement container (16) forms a removable attachment on the mixture inlet chamber (15) of the centrifuge housing (1).

6. A separator according to claims 2 and 5 characterised in that the settlement container (16) forms a closed container which is provided with an inlet for the first portion (13) and an outlet for the second portion (14) of the conduit (12) coming from the pump.

7. A separator according to claim 6 characterised in that the outlet of the second portion (14) is formed by a pipe portion (19) which projects from the bottom (17) of the closed settlement container (16) and which passes through an insertion opening (22) in the cover (21) of the mixture inlet chamber (15).

8. A separator according to claim 6 or claim 7 characterised in that the closed settlement container (16) has a vent pipe (23) which projects into the mixture inlet chamber (15).

9. A separator according to claim 7 or claim 8 characterised in that a respective shut-off means (24) is disposed in each of the projecting pipe portion (19) and in the optionally provided vent pipe (23), the shut-off means being opened when the settlement container (16) is fitted and closing when it is removed.

10. A separator according to claim 1 or claim 2 characterised in that the pump (11) is a rotary pump which is coaxial with the centrifuge (2).

11. A separator according to claim 4 characterised in that the second pump (50) is a pump which is coaxial with the centrifuge (2) and which is preferably self-priming.

12. A separator according to one of claims 1 to 11 wherein the mixture inlet (4) is provided at the top side of the centrifuge (2), characterised in that the pump (11) is disposed in the region of the solid discharge (8) coaxially with the centrifuge (2).

## Revendications (Revendications pour l'(les) Etat(s) contractant(s) suivant(s): CH, DE, FR, GB, IT, LI, SE)

1. Séparateur pour la séparation d'un mélange de matières solides et de liquide, en particulier à partir d'eau de rejet dentaire, comportant une centrifugeuse à bol plein (2) qui présente une entrée de mélange (4), une sortie (6) pour le liquide séparé et une évacuation de matières solides (8), un espace de réception (9) formé par une chambre de pompe (10) et disposé au-dessous de l'évacuation de matières solides (8), pour les matières solides qui s'écoulent avec une fraction de liquide résiduel sous l'effet de la force de gravité après chaque phase de centrifugation, dans lequel une pompe (11) est disposée, un récipient de décantation amovible (16) pour les matières solides, un dispositif pour ramener dans la centrifugeuse (2) le liquide résiduel s'accumulant au-dessus des matières solides déposées, et un conduit (12) divisé en tronçons (13, 14), le premier tronçon (13) du conduit (12) partant du côté refoulement de la pompe (11) et reliant l'espace de réception (9) au récipient de décantation (16) et le second tronçon (14) reliant l'espace collecteur de liquide du récipient de décantation (16) à l'entrée de mélange (4) de la centrifugeuse (2).

2. Séparateur selon la revendication 1, caractérisé en ce que le second tronçon (14) comporte un siphon (20).

3. Séparateur selon la revendication 1, caractérisé en ce que le second tronçon (14) comprend le canal d'aspiration (39) d'une seconde pompe (50).

4. Séparateur selon l'une quelconque des revendications 1 à 3, caractérisé en ce que le récipient de décantation (16) constitue un élément rapporté amovible d'une chambre d'entrée de mélange (15) du carter de centrifugeuse (1).

5. Séparateur selon les revendications 1 et 4, caractérisé en ce que le récipient de décantation (16) constitue un récipient fermé pourvu d'une entrée pour le premier tronçon (13) et d'une sortie pour le second tronçon (14) du conduit (12).

6. Séparateur selon la revendication 5, caractérisé en ce que la sortie du second tronçon (14) est constituée par un élément de tuyau (19) faisant saillie depuis le fond (17) du récipient de décantation fermé (16), et qui traverse une ouverture d'emboîtement (22) dans le couvercle (21) de la chambre d'admission de mélange (15).

7. Séparateur selon la revendication 5 ou 6, caractérisé en ce que le récipient de décantation fermé (16) présente un tuvau d'évent (23) faisant saillie dans la chambre d'entrée de mélange (15).

8. Séparateur selon la revendication 6 ou 7, caractérisé en ce qu'il est prévu dans le morceau de tuyau saillant (19) et, le cas échéant, dans le tuyau d'évent (23), un dispositif d'arrêt (24) qui est ouvert lorsque le récipient de décantation (16) est en place et qui se ferme lors de l'enlèvement de celui-ci.

9. Séparateur selon l'une quelconque des revendications 1 à 3, caractérisé en ce que la pompe (11) est disposée coaxialement avec la centrifugeuse (2).

10. Séparateur selon la revendication 3, caractérisé en ce que la seconde pompe (50) est disposée coaxialement avec la centrifugeuse (2) et est de préférence de conception à amorçage automatique.

## Revendications (Revendications pour l'(les) Etat(s) contractant(s) suivant(s): NL)

1. Séparateur pour la séparation d'un mélange de matières solides et de liquide, en particulier à partir d'eau de rejet dentaire, comportant une centrifugeuse à bol plein (2) qui présente une entrée de mélange (4), une sortie (6) pour le liquide séparé et une évacuation de matières solides (8), un espace de réception (9) disposé au-dessous de l'évacuation de matières solides (8), pour les matières solides qui s'écoulent avec une fraction de liquide résiduel sous l'effet de la force de gravité après chaque phase de centrifugation, et auquel une pompe (11) est adjointe un récipient de décantation amovible (16) pour les matières solides, un dispositif pour ramener dans la centrifugeuse (2) le liquide résiduel s'accumulant au-dessus des matières solides déposées, et un conduit (12) reliant l'espace récepteur (9) à l'entrée de mélange (4) de la centrifugeuse (2), caractérisé en ce que la pompe (11) est disposée dans l'espace de réception (9) et en ce que le conduit (12) menant à l'entrée de mélange (4) de la centrifugeuse (2) part du côté refoulement de la pompe (11).

2. Séparateur selon la revendication 1, comportant un conduit (12) divisé en tronçons (13, 14), le premier tronçon (13) reliant l'espace de réception au récipient de décantation (16) et le second tronçon (14) reliant l'espace collecteur de liquide du récipient de décantation (16) à l'entrée de mélange (4) de la centrifugeuse (2), caractérisé en ce que l'espace de réception (9) est constitué par la chambre de pompe (10) et en ce que le premier tronçon du conduit (12) part du côté refoulement de la pompe (11).

3. Séparateur selon la revendication 2, caractérisé en ce que le second tronçon (14) comporte un siphon (20).

4. Séparateur selon la revendication 2, caractérisé en ce que le second tronçon (14) comprend le canal d'aspiration d'une seconde pompe (50).

5. Séparateur selon l'une quelconque des revendications 2 à 4, caractérisé en ce que le récipient de décantation (16) constitue un élément rapporté amovible de la chambre d'entrée de mélange (15) du carter de centrifugeuse (1).

6. Séparateur selon les revendications 2 et 5, caractérisé en ce que le récipient de décantation (16) constitue un récipient fermé pourvu d'une entrée pour le premier tronçon (13) et d'une sortie pour le second tronçon (14) du conduit (12) venant de la pompe.

7. Séparateur selon la revendication 6, caractérisé en ce que la sortie du second tronçon (14) est constituée par un élément de tuyau (19) faisant saillie depuis le fond (17) du récipient de décantation fermé (16), et qui traverse une ouverture d'emboîtement (22) dans le couvercle (21) de la chambre d'entrée de mélange (15).

8. Séparateur selon la revendication 6 ou 7, caractérisé en ce que le récipient de décantation fermé (16) présente un tuyau d'évent (23) faisant saillie dans la chambre d'entrée de mélange (15).

9. Séparateur selon la revendication 7 ou 8, caractérisé en ce qu'il est prévu dans l'élément de tuyau saillant (19) et, le cas échéant, dans le tuyau d'évent (23), un dispositif d'arrêt (24) qui est ouvert lorsque le récipient de décantation (16) est en place et qui se ferme lors de l'enlèvement de celui-ci.

10. Séparateur selon la revendication 1 ou 2, caractérisé en ce que la pompe (11) est une pompe centrifuge coaxiale avec la centrifugeuse (2).

11. Séparateur selon la revendication 4, caractérisé en ce que la seconde pompe (50) est une pompe coaxiale avec la centrifugeuse (2), de préférence à amorçage automatique.

12. Séparateur selon l'une quelconque des revendications 1 à 11, dans lequel l'entrée de mélange (4) est prévue sur le dessus de la centrifugeuse (2), caractérisé en ce que la pompe (11) est disposée dans la zone de l'évacuation de matières solides (8), coaxialement avec la centrifuge (2).
